Europäisches Patentamt

European Patent Office

Office européen des brevets

(19)

(11) Veröffentlichungsnummer: **0 000 172**
**B1**

(12) **EUROPÄISCHE PATENTSCHRIFT**

(21) Anmeldenummer: **78100199.5**

(22) Anmeldetag: **20.06.78**

(51) Int. Cl.³: **B 29 H 17/02**, B 60 O 5/00

(54) Luftreifen

(30) Priorität: **28.06.77 DE 2729061**

(43) Veröffentlichungstag der Anmeldung:
**10.01.79 Patentblatt 79/01**

(45) Bekanntmachung des Hinweises auf die Patenterteilung:
**23.07.80 Patentblatt 80/15**

(84) Benannte Vertragsstaaten:
**DE FR GB SE**

(56) Entgegenhaltungen:
FR - A - 1 247 487
FR - A - 1 369 811
FR - A - 1 392 351
FR - A - 1 488 673
FR - A - 2 137 904

(73) Patentinhaber: **Bayer AG**
**Zentralbereich Patente, Marken und Lizenzen**
**D - 5090 Leverkusen 1, Bayerwerk (DE)**

(72) Erfinder: **Knipp, Ulrich Dr.**
**Haberlandstrasse 3**
**D - 5060 Bergisch-Gladbach 2 (DE)**
**Ganster, Otto, Dr.**
**Berliner Strasse 64**
**D - 5090 Leverkusen 1 (DE)**
**Sahler, Gerd**
**Engstenberg E 31**
**D - 5090 Leverkusen 1 (DE)**

Courier Press, Leamington Spa, England.

## Luftreifen

Die Erfindung betrifft einen Luftreifen, bestehend aus einer gürtelartigen Lauffläche und 2 Seitenteilen, wobei jedes Seitenteil aus einer Seitenwand mit Wulstring und einem Teil der Laufflächenunterlage besteht, und die Laufflächenunterlage als Ring ausgebildet ist, der bis zur Reifenmitte reicht und auf der anderen Seite mit der Seitenwand innigst verbunden ist.

Es ist bekannt, Luftreifen aus mehreren, getrennt gefertigten Teilen aufzubauen. Es können sich dabei niedrigere Herstellungskosten ergeben, und auf diese Weise ist es möglich, verschiedene Werkstoffe für verschiedene Reifenteile einzusetzen Schwachpunkte bei diesen Reifen sind die Verklebungen. Es sind zusätzliche Armierungen in axialer Richtung in der Lauffläche erforderlich, wenn der Reifen aus zwei Halbreifen aufgebaut ist, weil die Lauffläche alleine nicht ausreichend axial gerichtete Kräfte aufnehmen kann. Durch dies zusätzlich erforderlichen Verstärkungen erhöhen sich die Produktionskosten.

Aus der FR-PS 2 137 904 ist bekannt, einen Reifen aus einer gürtelartigen Lauffläche und 2 Seitenteilen aufzubauen, wobei die Laufflächenunterlage aus mehreren ineinander gesteckten und verklebten Schichten besteht, die jeweils bis zur Reifenmitte oder mehr oder weniger darüber hinaus reichen können und jeweils in der richtigen Höhe einseitig innigst mit der Seitenwand verbunden sind.

Der Erfindung liegt die Aufgabe zugrunde, einen mehrteiligen Reifen mit guten Gebrauchseigenschaften zu entwickeln, der eine wirtschaftliche Herstellung ermöglicht. Die Aufgabe wird durch einen Luftreifen gelöst, dessen Laufflächenunterlage folgende Merkmale hat:
a) am Umfang des Ringes in der Laufflächenmitte sind Bänder befestigt, die etwa die gleiche Länge wie die Ringbreite haben;
b) die Breite der Bänder ist näherungsweise gleich dem Abstand der Bänder untereinander;
c) in dem der Lauffläche zugewandten Teil des Ringes sind Vertiefungen vorhanden, in die die Bänder des zweiten Seitenteils beim Zusammenbau passen, so daß die Laufflächenterlage näherungsweise eine glatte Oberfläche nach dem Zusammenbau aufweist;
d) am Ende der Bänder ist je ein Wulst zum Einklemmen der Lauffläche vorhanden.

Von besonderem Vorteil bei dem erfindungsgemäßen Reifen ist die hohe Qualität; es können auch höher beanspruchte Reifen so aufgebaut sein. Durch die Wulste am Ende der Bänder wird die Lauffläche gehalten bzw. eingeklemmt. Armierungen in axialer Richtung sind nicht extra erforderlich. Bei Belastung und durch Erhöhung des Reieninnendrucks wird die Klemmwirkung noch erhöht.

Die Wulste am Ende der Bänder sichern den Zusammenhalt des Reifens. Trotzdem werden die Seitenteile und die Lauffläche unter Verwendung von Haftvermittlern, wie heute allgemein üblich verklebt. Der Einbau von Armierungen in Umfangsrichtung gehört zum Stand der Technik und wird bei dem erfindungsgemäßen Reifen nicht erschwert. Als Reifenwerkstoffe kommen vorzugsweise Elastomere auf der Basis von Polyurethan, Kautschuk, Polyolefinen, Polyamid oder Äthylen - Propylen - Dien - Mischpolymerisat in Frage. Sie können Verstärkungseinlagen in Form von Kurzfasern, Vliesen, Drähten oder Geweben enthalten; auch getrennt hergestellte Einlagen können eingebaut werden. Es bietet sich bei dem erfindungsgemäßen Luftreifen an, für die Lauffläche weicheres Material und für die Seitenwände steiferes Material einzusetzen.

Vorteilhaft ist die einfache Herstellung der Reifenteile; an den Werkzeugen sind keine Hinterschneidungen erforderlich. Es ist einfach möglich, an den Seitenteilen Verrippungen anzubringen, wodurch die Notlaufeigenschaften verbessert werden können.

Der erfindungsgemäße Reifen ist in den Zeichnungen beispielhaft dargestellt und im folgenden näher beschrieben.
Es zeigen:

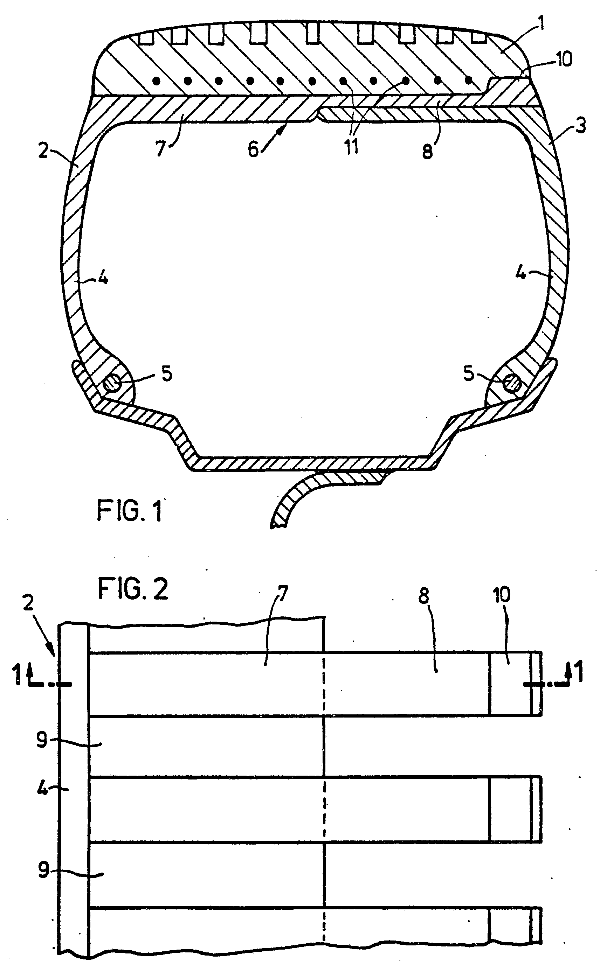

Figur 1 einen Querschnitt durch einen Reifen;
Figur 2 Aufsicht auf die Laufflächenunterlage eines Seitenteiles.

Der Reifen besteht im wesentlichen aus drei Teilen, der Lauffläche 1 und zwei Seitenteilen 2,3. Das Seitenteil besteht aus der Seitenwand 4 mit dem Wulstring 5 und der Laufflächenunterlage 6. Die Laufflächenunterlage ist als Ring 7 ausgebildet der mit der Seitenwand 4 (bereits durch die Herstellung) Verbunden ist. Der Ring reicht bis in die Mitte der Lauffläche. An dem Ring 7 hängen maschenartig Bänder 8. Die Bänder 8 haben nicht dieselbe Stärke wie der Ring 7, sondern sind höchstens halb so dick wie dieser. Auf der der Lauffläche zugeneigten Seite des Ringes schließen die Bänder 8 mit dem Ring 7 glatt ab. Auf der der Lauffläche 1 zugewandten Seite des Ringes 7 sind zwischen den Bändern 8 Vertiefungen 9 vorhanden. Beim Zusammenbau der beiden Seitenteile 2,3 kommen in diese Vertiefungen 9 jeweils die Bänder 8 des anderen Seitenteils zu liegen und die Laufflächenunterlage 6 ist dadurch näherungsweise glatt.

Am äußeren Ende von jedem maschenartigen Band 8 sind zur Laufflächenseite 1 hin Wulste 10 vorhanden. Sie sind auf entsprechende Aussparungen in der Lauffläche 1 abgestimmt. In der Lauffläche 1 sind noch Verstärkungseinlagen 11 in Umfangsrichtung eingezeichnet; auf axiale Armierungen in der Lauffläche kann bei diesem Reifen verzichtet werden. Die Seitenteile 2,3 können mit der Seitenwand 4 und den mit Wulsten 10 versehenen Bändern 8 in einem Arbeitsgang hergstellt werden. Die Seitenteile 2,3 und die Lauffläche 1 werden unter Verwendung geeigneter Haftvermittler verklebt. Durch das zusätzliche Verklemmen der Laufflächen 1 über die Wulste 10 am Ende der Laschen 8 auf einfache Weise ein sehr stabiler Reifenzusammenhalt erreicht.

**Patentansprüche**

1. Luftreifen, bestehend aus einer gürtelartigen Lauffläche und 2 Seitenteilen, wobei jedes Seitenteil aus einer Seitenwand mit Wulstring und einem Teil der Laufflächenunterlage besteht, und die Laufflächenunterlage als Ring ausgebildet ist, der bis zur Reifenmitte reicht und auf der anderen Seite mit der Sietenwand innigst verbunden ist, dadurch gekennzeichnet, daß die Laufflächenunterlage (6) folgende Merkmale hat:
a) am Umfang des Ringes (7) in der Laufflächenmitte sind Bänder (8) befestigt, die etwa die gleiche Länge wie die Ringbreite haben;
b) die Breite der Bänder (8) ist näherungsweise gleich dem Abstand der Bänder (8) untereinander;
c) in dem der Lauffläche (1) zugewandten Teil des Ringes (7) sind Vertiefungen (9) vorhanden, in die die Bänder (8) des anderen Seitenteiles (3) beim Zusammenbau passen, so daß die Laufflächenunterlage (6) naherungsweise eine glatte Oberfläche nach dem Zusammenbau aufweist;
d) am Ende der Bänder (8) sind Wulste (10) zum Einklemmen der Lauffläche (1) vorhanden.

2. Luftreifen nach Anspruch 1, dadurch gekennzeichnet, daß elastiche Werkstoffe auf der Basis von polyurethan, Kautschuk, Polyolefin, Polyamid oder Äthylen-Propylen-Dien-Mischpolymerisaten eingesetzt werden.

3. Luftreifen nach Anspruch 1 und 2, dadurch gekennzeichnet, daß Seitenteil (2,3) und Lauffläche (1) aus verschiedenem elastischen Material hergestellt sind.

4. Luftreifen nach Anspruch 1 bis 3, dadurch gekennzeichnet, daß in der Lauffläche (1) Verstärkungseinlagen (11) vorhanden sind.

5. Luftreifen nach Anspruch 1 bis 4, dadurch gekennzeichnet, daß Verrippungen in den Seitenteilen (2,3) vorhanden sind.

**Claims**

1. A pneumatic tyre comprising an encircling tread and two side members, each side member comprising a side wall having a bead ring and part of a tread backing and the tread backing comprises a ring which extends from the side wall, to which it is intimately joined, to the centre of the tyre, characterised in that the tread backing (6) has the following features:
a) bands (8) are fixed on the circumference of the ring (7) in the centre of the tread, the length of these bands (8) being substantially equal to the width of the ring (7);
b) the width of the bands (8) is approximately equal to the distance between the bands (8);
c) there are recesses (9) in the part of the ring (7) facing the tread (1), into which the bands (8) of the other side (3) fit during assembly, so that the tread backing (6) has a substantially flush surface after assembly;
d) there are beads (10) on the end of the bands (8) for clamping the tread (1).

2. A pneumatic tyre according to claim 1, characterised in that elastic materials based on polyurethane, rubber, polyolefin, polyamide or ethylene-propylene-diene mixed polymers are used.

3. A pneumatic tyre according to claim 1 and 2, characterised in that the side members (2 and 3) and the tread (1) are produced from different elastic materials.

4. A pneumatic tyre according to claim 1 to 3, characterised in that there are reinforcing inserts (11) in the tread (1).

5. A pneumatic tyre according to claim 1 to 4, characterised in that there are ribs in the side members (2 and 3).

**Revendications**

1. Bandage pneumatique se composant d'une surface de roulement en forme de ceinture et de deux épaulements dont chacun se compose d'un flanc avec le bourrelet et d'une partie du substrat de la surface de roulement, ce substrat de la surface de roulement étant conformé en anneau qui atteint le milieu du bandage pneumatique et qui est étroitement relié de l'autre côté au flanc, caractérisé en ce que le substrat (6) de la surface de roulement a les particularités suivantes:
a) des bandes (8) fixées à la périphérie de l'anneau (7) au milieu de la surface de roulement ont une longueur sensiblement égale à la largeur de cet anneau;
b) la largeur des bandes (8) est approximativement égale à la distance qui les sépare;
c) la partie de l'anneau (7) tournée vers la surface de roulement (1) comporte des évidements (9) dans lesquels s'adjustent les bandes (8) de l'autre épaulement (3) lors de l'assemblage, de manière que ledit substrat (6) de la surface de roulement ait une surface sensiblement unie après assemblage;
d) les bandes (8) comportent à l'extrémité des bourrelets (10) d'accrochage de la surface de roulement (1).

2. Bandage pneumatique selon la revendication 1, caractérisé en ce que des matériaux élastiques à base de polyuréthanne, de caoutchouc, de polyoléfine, de polyamide ou de copolymères d'éthylène, de propylène et d'un diène sont utilisés pour sa fabrication.

3. Bandage pneumatique selon les revendications 1 et 2, caractérisé en ce que les épaulements (2, 3) et la surface de roulement (1) sont en des matériaux élastiques.

4. Bandage pneumatique selon les revendications 1 à 3, caractérisé en ce que la surface de roulement (1) contient des armatures de renfort (11).

5. Bandage pneumatique selon les revendications 1 à 4, caractérisé en ce que les épaulements (2, 3) comportent des nervures.

FIG. 1

FIG. 2